# EUROPEAN PATENT SPECIFICATION

(11) **EP 1 718 411 B1**
(45) Date of publication and mention of the grant of the patent: **07.04.2010**
(21) Application number: 05701382.3
(22) Date of filing: 08.02.2005
(51) Int. Cl.: B01L 3/02

(54) **A DEVICE FOR ANALYSING AN INTERACTION BETWEEN TARGET AND PROBE MOLECULES**
VORRICHTUNG ZUR ANALYSE EINER WECHSELWIRKUNG ZWISCHEN TARGET- UND SONDENMOLEKÜLEN
APPAREIL POUR ANALYSER L'INTERACTION ENTRE MOLECULES CIBLES ET SONDE

(30) Priority: 11.02.2004 EP 04447038; 14.05.2004 US 571201 P
(43) Date of publication of application: 08.11.2006
(73) Proprietor: PamGene B.V., 5211 's Hertogenbosch (NL)
(72) Inventor: VAN, BEUNINGEN, Marinus, Gerardus, Johannes, NL-5345 RR Oss (NL)
(74) Representative: De Clercq, Ann G. Y.
(86) International application number: PCT/EP2005/001267
(87) International publication number: WO 2005/077537

(56) References cited:
- EP-A1- 1 050 588
- EP-A1- 1 533 015
- US-A- 5 252 293
- US-A- 5 556 598
- US-A- 5 843 767
- US-A1- 2002 012 920
- US-B1- 6 660 233

## Description

### BACKGROUND of the INVENTION

Biomedical tests are generally based on the detection of an interaction between a target molecule or analyte in a sample with a known probe molecule, which is present in a established amount and position. Currently, the test use probe molecules in the form of libraries on supports, in the form of micro-arrays or chips, enabling the simultaneous testing of a target molecule against a multitude of probes. The fabrication of micro-arrays is well known in the art. In the micro-arrays the probes are located on predetermined and addressable positions. The probes are either pre-made and immobilised on the support, or synthesized on the support.

The detection of the interaction between the target molecule and the probe molecule is generally carried out as follows. The probe molecules are present on specific locations on the support in the form of a micro-array, and the target molecule is provided in a solution, under well defined conditions enabling the specific binding of the target molecule to the probe molecule. The binding between the target molecule with its corresponding probe molecule is substantially more stable than the a-specific interaction between the target molecule and random probes, which are not specific for the target molecule. For the removal of a-specific target molecules, which are not specifically binding to probe molecules, the support is rinsed, washed or heated.

The detection of the specific interaction between the target and the probe molecules may be performed by a variety of methods, which generally includes the use of a detectable marker. The detectable marker may either be attached to the target molecule before the interaction with the probe, or may be used after the target molecule has interacted with the probe molecule. Typically, these markers have fluorescent groups, enabling a precise localisation, even at high density, relative to other markers, while they can be used in large quantities at relatively little cost.

Certainly clinical laboratories and drug discovery research have to perform large number of tests, for which automation solutions are being developed and installed, in order to increase productivity, reduce cost and eliminate sample to sample variation. System based automation is normally the first step in laboratory automation, which are to improve turnaround times and minimize operator intervention. Exemplary are SBS (Society for Biomolecular Screening) standard formats allowing the use of standard screening instrumentation, especially in automated robotic platforms. Using for example a plate format with an array of 96, 384 or 1536 reactor zones or wells allows a parallel processing of a large number of chemical and/or biochemical reactions resulting in very efficient high throughput reactions. The plate of the system may be bar-coded for identification.

However, the automation solutions according to SBS standard format, allowing the use of standard screening instrumentation, for instance on existing robotic HTS (high throughput screening) platforms is not directly amenable to micro-array systems, but for high costs and further equipment. Adaptation to standard instrumentation formats reduces the manual workflow steps, improves the allocation of resources, improves the turnaround time, reduces operating costs, improves overall efficiency and productivity, improves safety and/or reduces the error rates.

WO 03/059516 describes a reaction vessel for carrying out array processes. The reaction vessel of typical form and scale comprises a support element which is arranged at the base surface of the vessel, with probe molecules immobilised thereon. This reaction vessel is not suited for automated HTS.

US 5,545,531 and US 5,874,219 describe methods for concurrently processing multiple biological chips by providing a biological chip plate comprising a plurality of test wells, each containing a micro array. However, this format reduces the flexibility of the end user. All micro-arrays are used simultaneously, although this may not always have to be necessary. Usually, the micro-array will be the main expense per test. In addition, all the constituents of the micro-arrays are fixed per plate, while dependent on the test different micro-arrays may be necessary.

US 6,660,233 discloses an instrument involving transport of a substrate on bioarray chips mounted on a holder from a reaction station to a detection station. The holder with the attached array chips is immersed in a well filled with sample. However, the process does not include wash steps or fluid applications for array chips. This limits the field of application and flexibility.

US 5,395,521 relates to a pipette packed with two porous polyethylene spheres and binding material. However, the binding material is not adapted for immobilisation purposes and does not allow an interaction between for instance target and probe molecules.

WO 99/06149 discloses the preparation of standard solutions for use as reference samples.

EP 1533015 provides a housing, such as a pipette tip, containing the defined porous media for the concentration, purification and sized-based separation of target analytes from a sample.

US 5,556,598 relates to a device for capturing a component present in a fluid, comprising a pipette tip having an open rearward end adapted to be fitted on a pipette for drawing fluid into the pipette tip, an open forward end, and at least one membrane extending across the pipette tip at or adjacent its forward end.

EP 1050588 relates to a device for performing an assay, which device comprises a substrate having oriented through-going channels, said channels opening out on a surface for sample application, the channels in at least one area of the surface for sample application being provided with a first binding substance capable of binding to an analyte.

US 5,843,767 discloses an improved microfabricated apparatus for conducting a multiplicity of individual and simultaneous binding reactions.

From the above description of the prior art it will be clear that there exists a continuous need for micro-arrays which are amenable to automation, but are cost effective and provide flexible solutions to customary need.

The present invention provides a elongated hollow tubular body comprising a support which addresses these needs.

### SUMMARY of the INVENTION

The present invention relates to elongated hollow tubular body for analysing an interaction between target and probe molecules, comprising a support with through going channels enabling flow through of liquids arranged at the open end, and a mouthpiece at the other end. In particular a flow-through array technology linked to a disposable in the form of a 0.1-1 ml standard pipet tip is provided. The device pre-spotted with a number of markers can be used in robotic/liquid handling system capable of handling disposable tips. The robotic/liquid handling system has the ability to perform all liquid handling steps through the syringes on the system including the binding of markers in the flow-through arrays. Furthermore all incubation steps can be performed on the platform which is equipped with an incubator device and an optical read-out device for analysing its signal.

### DETAILED DESCRIPTION of the INVENTION

The present invention relates to a device (100) for analysing an interaction between target and probe molecules, comprising: a pipette tip having a tubular housing (107) having a proximal end (102) and a distal end (101) defining an internal flow passageway wherein said tubular housing has a constant diameter and a fructo conical structure tapering from the distal side, and a flow through support member provided within or on the housing (107) obstructing said internal passageway, characterised in that said flow through support member (104) is in the form of a sheet, film or membrane and is provided with through going channels having a pore size diameter between 50-400 nm, said channels provided with probe molecules suitable for allowing an interaction between target and probe molecules, and wherein the thickness of the said flour through support member is inferior to 500 µm.

In the present specification and the appended claims, the singular forms "a", "an", and "the" include plural references unless the context clearly dictates otherwise. Unless defined otherwise, all technical and scientific terms used herein have the same meaning as commonly understood to one of ordinary skill in the art.

### tubular housing

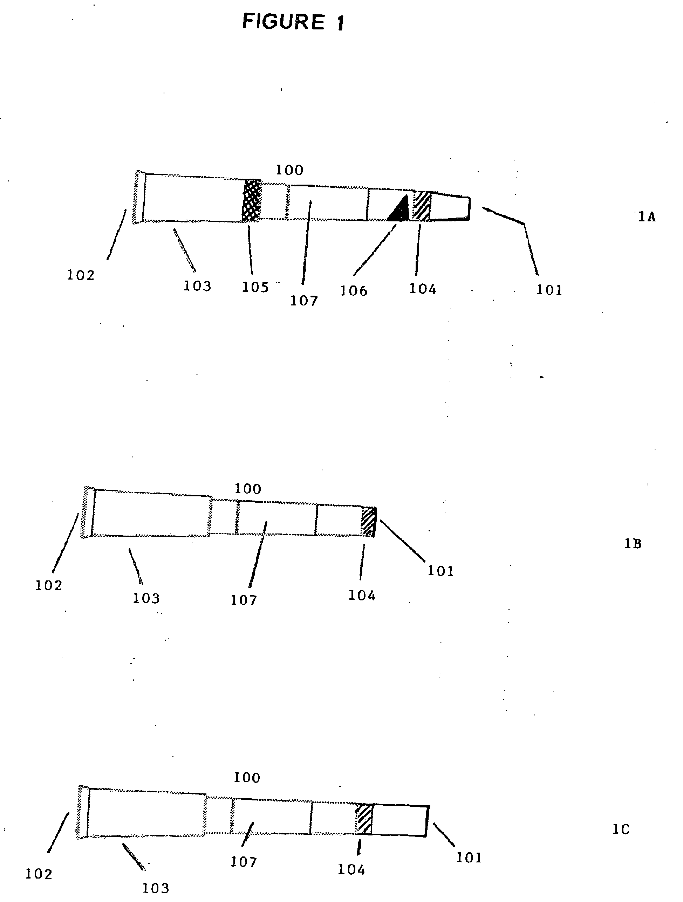

The tubular housing (107) of the invention (Figure 1) has a mouthpiece (103) at the proximal end (102) of the housing and an open end at the distal side (101) opposite to the mouthpiece. The mouthpiece is used for fastening the body to a handling device. The mouthpiece may be a conical receiver for squeezing the body onto a conical projection or holder of the handling device. The bodies are releasably fastened onto the handling devices, so that after usage it may be disposed and exchanged for a fresh body.

The invention thus relates to a device (100) as described herein, which is releasably mounted on a holder. The open end is open for aspirating and releasing liquids. The tubular housing having a proximal end (102) and a distal end (101) defining an internal flow passageway. The displacement of the liquids into and out of the housing via the internal flow passageway, predominantly in quantified amounts, are usually evaluated by a pressure difference between the ambient pressure and the pressure in the handling device. This pressure difference may be effectuated via an air cushion. If the device comprises a flow through support member, such as a porous support having minute channels, pressure difference must be regulated to ensure an appropriate flow of liquids. Considerations regarding the fluidics are set out in US patent No. 6,383,748, incorporated herein by its entirety. The device (100) comprises a support member (104), which is located at the distal end (101) of the housing (107), e.g.
Figure 1B, or inside said housing (107), e.g. Figures 1A and 1C. The plane of the support may extend substantially perpendicular to the longitudinal axis of the housing.

Accordingly, the present invention relates to the device as described herein, wherein the support member (104) is provided at, e.g. Figure 1B, or near, e.g. Figures 1A and 1C, the distal end (101) of the housing (107).

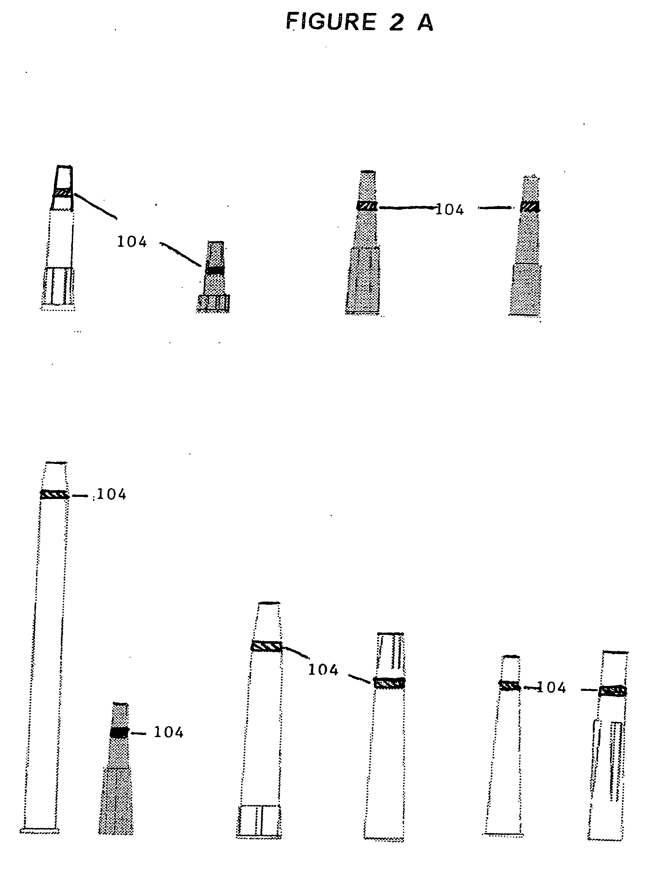

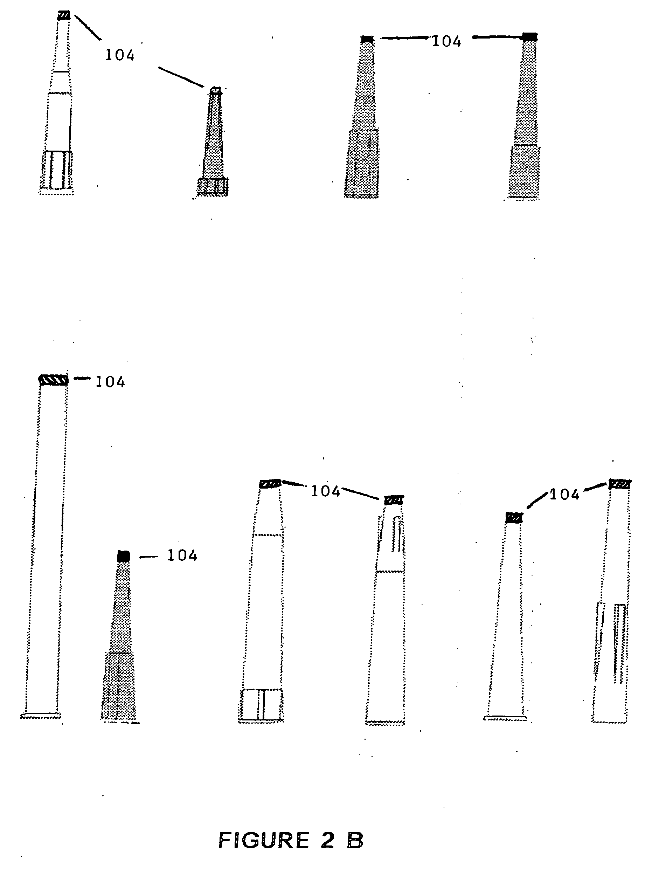

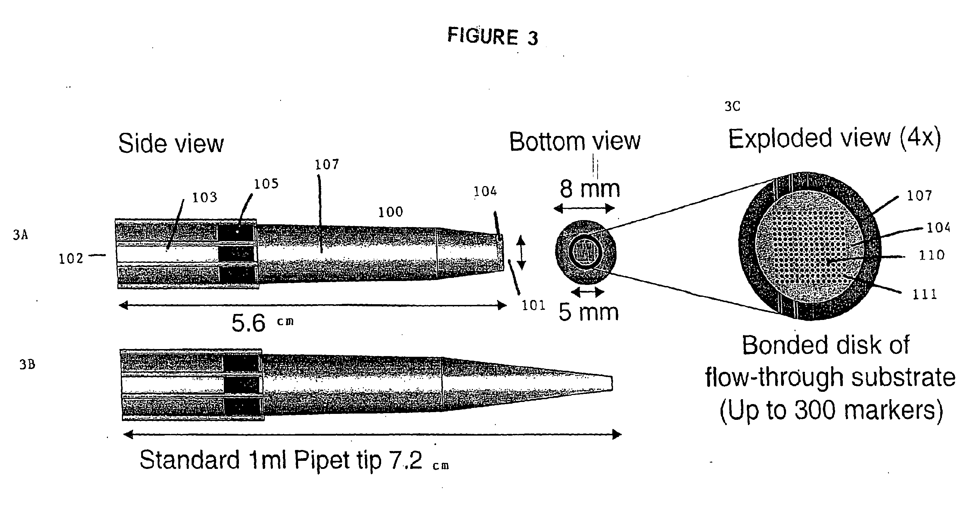

The housing of the device of the invention has a cylindrical structure, or a form and scale typical of a laboratory pipet tip, more particularly a cone-shaped cylindrical body or a cylindrical structure with a frustoconical structure tapering from the cylindrical structure. Typical laboratory pipet tips comprising the support member (104) are depicted in Figures 2A (inside the housing) and 2B (on the distal end of the housing), whereby part of the distal end of the pipet tip has been removed. Typical laboratory pipet tips contemplated in the invention may provide pipetting volumes of for instance, 1-100 µl, 1-200 µl, 1-250 µl, 10-500 µl, 100-200 µl, 100-1000 µl, 200-500 µl, 200-500 µl, 500-1000 µl and 1-5 ml manufactured by for instance Beckman Biomek, Clay Adams selectapette, Eppendorf, Finnpipette, Oxford or Pipetman. Figure 3B shows in essence the dimensions of a common 1 ml pipet tip, manufactured in large amounts of polypropylene. The length is about 7.2 cm with the bore of the mouthpiece having an internal diameter of about 8 mm and the bore at the distal end of about 1 mm. Figure 3A depicts an embodiment of the device (100) according to the invention. Part of the distal end has been removed, reducing the length of the housing to about 5.6 cm and widening the bore of the distal end (101) to about 5 mm. The support member (104) has been attached to the distal end of the housing (107). This structure enables easy access to the support member. It is preferred that the open end on the distal side of the device fits into containers or wells comprising reagents, samples and the like, such as the wells of a SBS plate. In case that the support member (104) is provided within the housing (107) it is preferred that the diameter of the housing distal to the support member is at least the diameter of the support member. If the support member (104) is provided in the housing (107), and the diameter of the housing distal to the support member is less than the diameter of the support member, then part of the housing distal to the support member may be removed before analysis. The person skilled in the art will appreciate that other structures and dimensions of the device are feasible, provided the housing can be attached to the handling device and comprises a support member.

Accordingly, the present invention relates to the device as described herein, comprising a form and scale typical of a laboratory pipet tip. Accordingly, the device according to the invention may comprise a volume of between 10 µl to 10 ml, preferentially about 1 ml.

The present invention relates to the device as described herein, comprising a housing with a constant diameter and frustoconical structure tapering to the distal side, whereby the support is arranged at the distal end of the housing, inside the frustoconical structure or in the housing with a constant diameter.

The housing of the device is preferably easily manufactured, in large amounts and cost-effectively, and may be made from material standard in the art. In an embodiment, the material of which the housing body is made, is selected from the group consisting of glass, glass ceramics, plastic coated glass, metals, such as stainless steel, platinum, and/or aluminium, rubber, or plastics such as topaz, polypropylene, nylon, polyethylene, polystyrole, PET (polyethylene terephthalate), polycarbonate, silicones, polytetrafluor-ethylene, (teflon), polymethylmethacrylate, and/or polymethane-ethylacrelate. The person skilled in the art will appreciate that other materials are feasible dependent on specific needs.

### support member

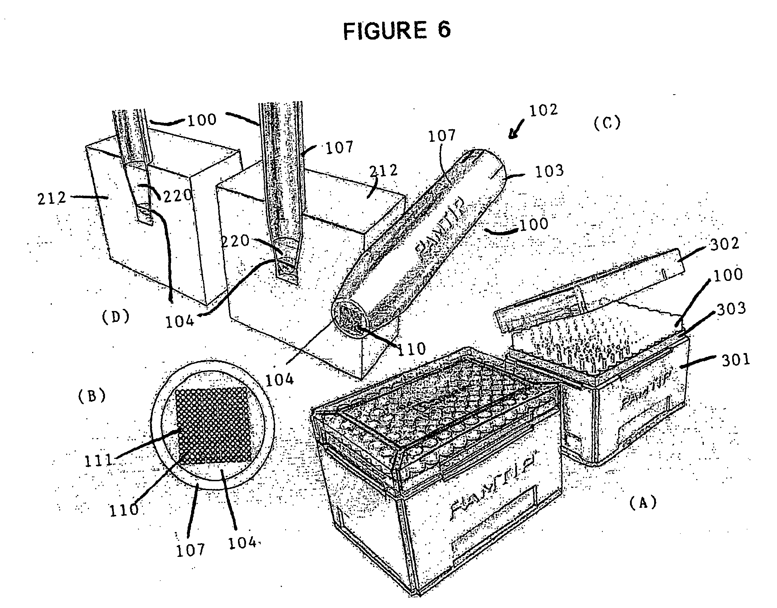

The support member (104) may be mounted at the distal end (101) of the housing (107), such as for instance shown in Figures 1B and 6C, or at the inside of the housing (107), such as for instance shown in Figure 1C, obstructing the internal passageway.

The support member may be arranged to or in the housing by moulding, gluing, thermal bonding, light curable bonding, chemical bonding or the like. Preferably, the support member is connected with the housing across the complete internal cylindrical cavity or bore of the body, thereby forming a barrier in the internal passageway hindering the flow or passage of liquids and gases. As a result liquids are directed through the channels of the support member, while not through openings between the wall of the housing and the support member, having less resistance. Any openings between the support member and the wall of the housing or the distal end of the housing may be closed by sealing materials, such as for instance silicones, rubber and the like. Glues applicable for attaching the support member to the housing are known in the art, such as for instance polydimethylsiloxane, e.g. Sylgard 182 or Sylgard 184 (Dow Coming, Midland, Michigan, USA), glues based on siloxanes, polyurethane based glues, epoxide resin based glues, cyanacrylate based glues, acryl based glues and/or heat based glues.

The invention relates thus to a device as described herein, wherein the support member spans the bore of the housing.

In order to fully appreciate the invention, the support member is preferably porous, that is, permeable by liquids, allowing the passage of liquids in and out of channels of the support member. The term "channel" as used in the present invention refers to a single pore in the porous support member. A pore size diameter as useful in the present invention is 50-400 nm. A support member as useful in device of the present invention may comprise about 10⁵-10⁹, 10⁶-10⁸ or preferably 10⁷ pores per mm². The porosity may range from about 20-80%, 30-70%, 40-60% or about 50%. The thickness is inferior to 500 µm Preferred thickness of the support member, especially metal oxides range from about 20-500 µm, 30-250 µm, 40-100 µm or about 60 µm.

The support member obstructs the internal passageway of the housing, and directs the passage through the channels of support member.

Thus, the present invention relates also to a support member, wherein the channels extend substantially coaxial with the longitudinal axis of the housing.

The porous nature of the support member facilitates the pressurized movement of fluid, e.g. the sample solution, through its structure. In contrast to two-dimensional support members, the flow-through nature of a 3-dimensional support member or micro-array, as employed in the methods as described herein, gives significantly reduced hybridisation times and increased signal and signal-to-noise ratios. Further, a positive or negative pressure may be applied to the support members in order to pump the sample solution dynamically up and down through the channels of the support member. By repeatedly applying a pressure difference over the support member and thus forcing the fluid to pass through the channels of the support member and, subsequently back into the well results in a better mixing of ingredients, and is thus an alternative for mechanical mixing methods such as bubbling, stirring, vortexing or agitating. Efficient use is made of the capillary forces of the channels in the support member. The person skilled in the art will appreciate that the dimensions of the channels and the composition of the fluids provide a particular assessment of the pressures applied.

A number of materials suitable for use as support members in the present invention have been described in the art. Particular suitable materials for use as support members in the present invention include any type of solid porous supports known in the art. The support member may be in the form of sheets, films or membranes and may be permeable. For example, the support member may consist of metal oxide membranes. The porous support member is preferably planar. The surface to which a probe molecule is adhered may be an external surface or an internal surface of the porous support member. Particularly where the support member is porous, the probe molecule is likely to be attached to an internal surface.
Where the solid support member is porous, various pore sizes may be employed depending upon the nature of the system.

The material of the porous support member may be, for example, chosen from the group consisting of metals, metal oxides, e.g. aluminium oxide, ceramic metal oxide, micro fabricated porous silicon, or organic polymers, such as a nylon filter, or a membrane. In view of strength and rigidity, a metal or a ceramic metal oxide may be used. In view of heat resistance and chemicals resistance, a metal oxide may be preferred. In addition, metal oxides provide a support having both a high channel density and a high porosity, allowing high density arrays comprising different probe molecules per unit of the surface for sample application. In addition, metal oxides are highly transparent for visible light. Metal oxides are relatively cheap supports that do not require the use of any typical micro fabrication technology. They offer an improved control over the liquid distribution over the surface of the support. Metal oxide membranes having through-going, oriented channels can be manufactured through electrochemical etching of a metal sheet. The kind of metal oxide is not especially limited. As a metal, for example, a porous support member of stainless steel (sintered metal) can be used. For applications not requiring heat resistance, a porous support member of an organic polymer can also be used.

Metal oxides considered are, among others, oxides of zirconium, silica, mullite, cordierite, titanium, zeolite or zeolite analog, tantalum, and aluminium, as well as alloys of two or more metal oxides and doped metal oxides and alloys containing metal oxides.

In an embodiment, the support member as described herein is an aluminium-oxide support member.

The support member may have any thickness, provided that it is transparent or translucent when porous. The metal oxide supports are transparent, especially if wet, which allows for assays using various optical techniques. Such supports have oriented through-going channels with well-controlled diameter and useful chemical surface properties. Patent application EP-A-0 975 427 is exemplary in this respect.

Accordingly, the present invention relates to a device as described herein comprising a support member which is optically transparent or translucent.

In an embodiment, the housing (107) comprises a filter (105) capable of passing gases and liquids, and evaluating a pressure difference. The filter may be hydrophobic filter. The filter prevents vapours from rising up into the handling device and contaminating it. The filter (105) may be fixed at a location inside the housing (107) in between the position of the support member (104) and the mouth opening (103) at the proximal end (102), e.g. at the vicinity of the mouth opening (Figures 1A and 3A).

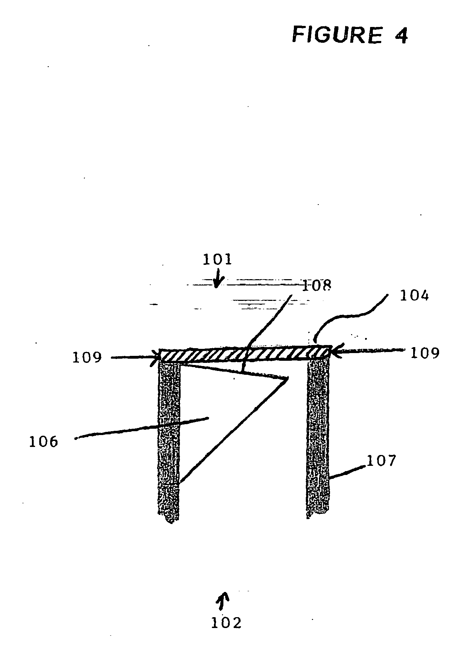

In a further embodiment, the device further comprises a shielding member (106) partially shielding the opening of the housing (107). The shielding member (106) may be fixed at a location inside the housing (107) in between the position of the support member (104) and the mouth opening (103), preferably in between the position of the filter (105) and the support member (104). In this manner a real time reading of the support member from the distal side (101) is possible when the sample fluid in the housing (107) is transported to the proximal side (102) of the support member (104), and predominantly proximal to the shielding member (106), avoiding any background signal caused by free label in the sample fluid. The device showing in Figure 1A is provided with a shielding member (106) partially shielding the opening at the distal end (101). The shielding member (106) with a wedged shaped cross-section in the embodiment shown having a preferably flat lower surface (108) inclined with respect to the interface (109) of the support member (104). In this manner a fluid passing through the (capillary) channels of support member (104) will gradually contact the lower surface (108) inclined with respect to the interface (109) of support member (104) from the left to the right according to the cross-section of Figure 4 thus avoiding any air bubbles. The shape of the shielding member with the inclined lower surface (108) further improves the mixing of the sample fluid during transporting the sample fluid through the channels of the support member (104). The angle of inclination of the lower surface (108) of the shielding member (106) is preferably at least 5°. The shielding member may comprise a wedged shaped cross section.

For improving classification, for example in high-throughput drug screening, the present invention contemplates that the device may comprise a code for identification, preferably a bar-code. The bar-code may be provided on the housing. In addition, or in the alternative, the support member may comprise a code for identification.

### probe molecules on support member

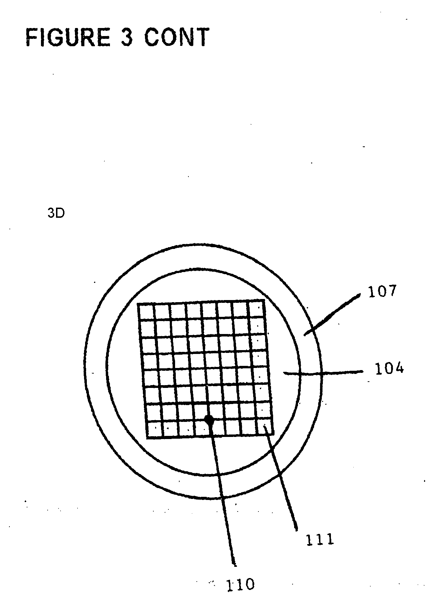

The support member comprises probe molecules able to interact with target molecules. The support member comprises at least one type of probe molecules, but preferably comprises more than one type of probe molecules. The probe molecules may be arranged in an array. As used herein, the term "array" relates to a collection of probe molecules, at least two of which are preferably different, arranged in a spatially defined and physically addressable manner. In this regard, the term "spot" relates to the spatially defined and physically addressable position of a probe or type of probe on the support member at the distal side. The terms "array" and "micro-array" are used interchangeably throughout the description. Preferably, the probes are arrayed on and/or in a support member in addressable rows and columns in which the dimensions of the support member conform to the dimension of the plate test well or test tubes. The selection of probes and their organization in an array depends upon the use to which the support member will be put. The arrays of the present invention may be of any desired size, from two spots to 10⁶ spots or even more. The upper and lower numbers are determined solely by practical considerations of working with extremely small or large support members. For a given support member size, the upper limit is determined only by the ability to create and detect the spots in the micro-array. The preferred number of spots on a micro-array generally depends on the particular use to which the micro-array is to be put. For example, sequencing by hybridisation will generally require large arrays, while mutation detection may require only a small array. In general, micro-arrays contain from 2 to about 10⁶ spots, or from about 4 to about 10⁵ spots, or from about 8 to about 10⁴ spots, or between about 10 and about 2000 spots, or from about 20 to about 1000 spots, or from 100 to 500 spots, or about 300 spots. An embodiment is depicted in Figures 3C and 6B, showing from the distal to proximal direction an exploded view of a housing (107) having a support member (104) attached to the distal end (101) thereto, wherein the support member (104) comprises 196 individual spots (111) comprising probe molecules, the spots (111) being arranged in an array (110) of rows and columns. Figure 3D shows another embodiment comprising 64 individual spots (110). Not all the spots on the array need to be unique. Indeed, in many applications, multiple targets are detected and furthermore, redundancies in the spots are used for the purpose of acting as internal controls.

In an embodiment, the present invention relates to the device as described herein, wherein said support member is provided with probe molecules suitable for interacting with target molecules, preferably said probe molecules are present within said through going channels.

The probe molecules may be synthesized and subsequently attached on the support member, or the probe molecules may be synthesized directly on the surface of the substrate. A variety of techniques have been described for synthesizing and/or immobilizing arrays of polynucleotides, including *in situ* synthesis, where the polynucleotides are synthesized directly on the surface of the substrate (see, e.g., U.S. Pat. No. 5,744,305 to Fodor, et al.,) and attachment of pre-synthesized polynucleotides to the surface of a substrate at discrete locations (see, e.g., WO 98/31836). Additional methods are described in WO 98/31836 at pages 41-45 and 47-48, among other places. The present invention is suitable for use with any of these currently available, or later developed, techniques. Immobilization of pre-synthesized polynucleotides at different spatial addresses yields an array of polynucleotides whose sequences are identifiable by their spatial addresses.

The term "probe molecules" as used in the present specification refers both to separate molecules and to portions of molecules such as e.g. an epitope of a protein. Non-limiting examples of probe molecules which may be employed in the present invention include, but are not limited to, antibodies including monoclonal antibodies polyclonal antibodies, purified antibodies, synthetic antibodies, antisera reactive with specific antigenic determinants (such as viruses, cells or other materials), proteins, peptides, polypeptides, enzyme binding sites, cell membrane receptors, lipids, proteolipids, drugs, polynucleotides, oligonucleotides, sugars, polysaccharides, cells, cellular membranes and organelles, nucleic acids including deoxyribonucleic acids (DNA), ribonucleic acids (RNA), and peptide nucleic acids (PNA), Aptamers, or any combination thereof; cofactors, lectins, metabolites, enzyme substrates, metal ions and metal chelates.

In an embodiment of the present invention, the device as described herein comprises a support comprising probe molecules which are chosen from the group consisting of nucleic acids, peptides, proteins and antibodies.

The term "nucleic acid" as used herein means a polymer composed of nucleotides, e.g. deoxyribonucleotides or ribonucleotides. The terms "ribonucleic acid" and "RNA" as used herein means a polymer composed of ribonucleotides. The terms "deoxyribonucleic acid" and "DNA" as used herein means a polymer composed of deoxyribonucleotides. The terms "oligonucleotide", "primer" and "probe" as used herein denote single stranded nucleotide multimers of from about 6 to 150, from about 10 to about 100 or from about 12 to about 60 nucleotides in length. The term "polynucleotide" as used herein refers to a single or dou,ble stranded polymer composed of nucleotide monomers of from about 10 to about 100 nucleotides in length, usually of greater than about 100 nucleotides in length up to about 1000 nucleotides in length. Oligonucleotides are generally, but not necessarily, synthesized *in vitro.* A segment of a nucleic acid that is about 6 to 150 bases in length and that is a subsequence of a larger sequence may also be referred to as an oligonucleotide sequence.

In a further embodiment of the present invention, the device as described herein comprises a support member comprising probe molecules which are chosen from the group consisting of DNA and/or RNA molecules.

In a further embodiment of the present invention, the probe molecules comprise a predetermined set of oligonucleotides, each set chosen to be specific for a respective target nucleic acid sequence.

As used herein the term "target" connotes a molecule that has an affinity for a given probe. Targets may be naturally-occurring or man-made molecules. Also, they can be employed in their unaltered state or as aggregates with other species. Targets may be attached, covalently or non-covalently, to a binding member, i.e. probe molecule, either directly or via a specific binding substance. Examples of targets which can be employed by this invention include, but are not restricted to, antibodies, cell membrane receptors, monoclonal antibodies and antisera reactive with specific antigenic determinants (such as on viruses, cells or other materials), drugs, oligonucleotides, nucleic acids, peptides, cofactors, lectins, sugars, polysaccharides, cells, cellular membranes, and organelles. Targets are sometimes referred to in the art as anti-probes. As the term targets is used herein, no difference in meaning is intended.

### apparatus

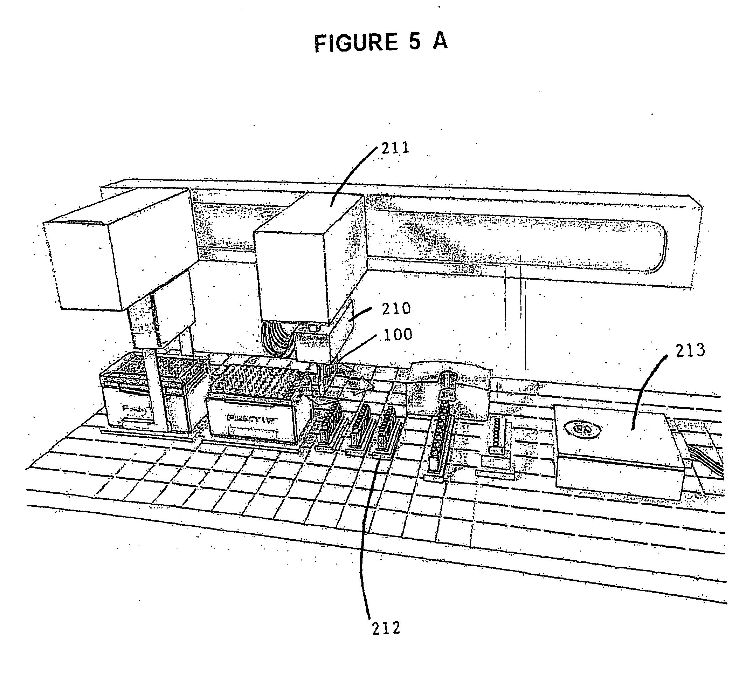

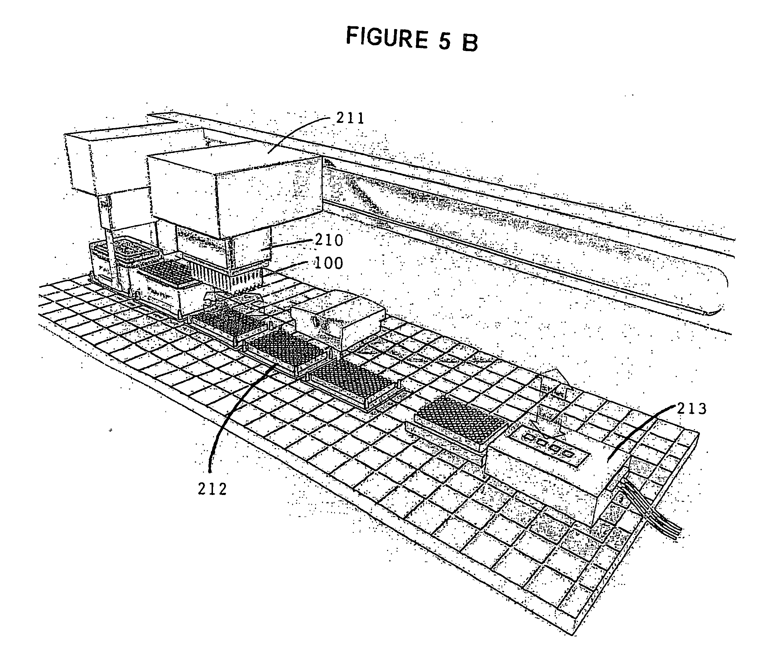

The device (100) according to the invention may be subjected to manipulation by a robotic or fluid handling device that automatically performs steps to carry out reactions between target molecules in samples and probe molecules, and subjecting the device to a detection device that interrogates the support member to detect interactions between target molecules and probe molecules (see e.g. Figures 5A and 5B). For this, the device may releasably be mounted onto a holder of a handling device, such as a pipetting system of an automated or robotized analyser. The assays on micro-arrays on the device of the invention generally include, wetting and pre-activation steps and subsequent contacting a probe molecule with a fluid sample under selected reaction conditions, including mixing, optionally washing the support member to remove non-reacted molecules, and analysing the array for evidence of an interaction between target molecules and the probe molecules. These steps involve handling fluids. The methods of this invention automate these steps so as to allow multiple assays to be performed concurrently, such as for instance a sample being contacted with multiple probe molecules on an array, a sample being contacted with multiple, different arrays, or each of multiple samples contacted with an array, which may be different or the same in each case. Accordingly, this invention employs automated fluid handling systems for concurrently performing the assay steps with each of the support members attached to the housings of the device. Fluid handling allows uniform treatment of samples. Microtiter robotic and fluid-handling devices are available commercially, for example, from Tecan Group Ltd. The apparatus may comprise a computer having a programme controlling the various process and dislocation steps.

The device comprising the support member is introduced onto a holder of a fluid-handling device. This robotic device may be programmed to set appropriate reaction conditions, such as temperature, adding of samples to support members, incubating and mixing the support members for an appropriate time, removing non-reacted samples, washing the support members, adding substrates as appropriate and perform detection assays. The particulars of the reaction conditions depend upon the purpose of the assay.

In a further embodiment, the present invention relates to an apparatus for analysing an interaction between target and probe molecules, comprising:
(a) a handling station (210) comprising a handling device (201), for aspirating and/or dispensing fluid medium, said handling device comprising a device as defined in claim 1, mounted thereto,
(b) a means for transporting (211) said handling station to a plurality of sections,
(c) at least one incubation section (212)(see e.g. Figure 6D) comprising an incubation device, for administering a fluid sample possibly comprising target molecules to the support member, incubating the support member comprising the fluid sample and/or washing the support member, and
(d) an analysis section (213) comprising a detection device for detecting an interaction between target and probe molecules, thereby analysing an interaction.

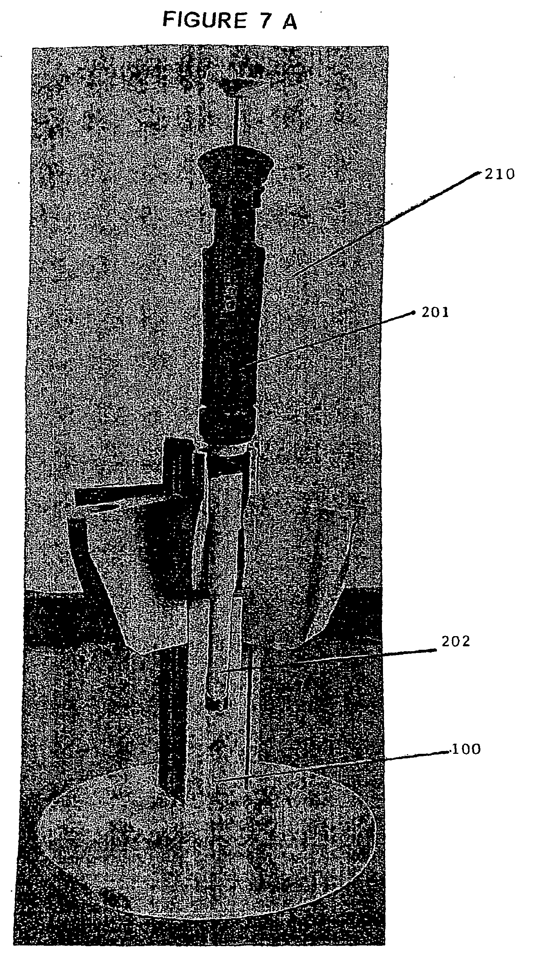

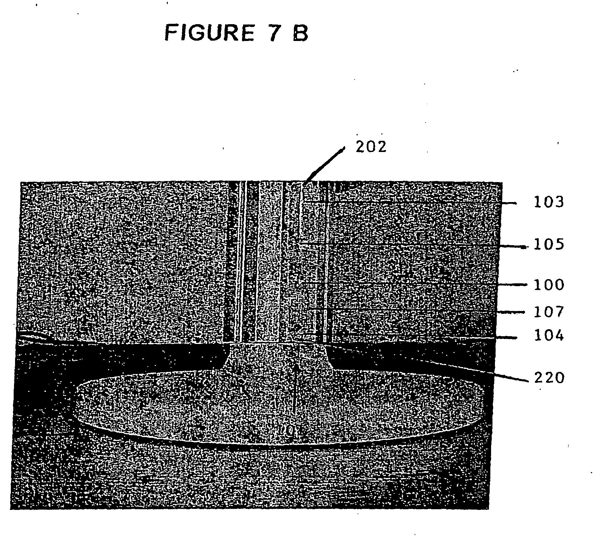

The handling station (210) comprises a handling device (201) comprising a holder (202) onto which the device (100) according to the invention may releasably be fastened. The holder (202) may be conical projection over which the mouthpiece (103) of the housing (107) is slided and pressed until the device (100) is only in contact with the handling device (201) via the mouthpiece (103), while having no or minimal contact with the outside environment via the mouthpiece (103) (see e.g. Figure 7). The handling device (201) may be used for metering fluid quantities, in that fluids are suctioned into the device and released there from in adjustable and controllable quantities. For this, pistons may be displaceably arranged in a cylinder of the handling device. With air cushion systems, the piston and the cylinder are integrated into the handling device and communicate with the device of the invention so that the displacement of the medium is evaluated via an air cushion. The handling station may for instance be manually (see e.g. Figure 7) or automatically operated (see e.g. Figures 5A and 5B), such as controlled by for instance a computer. Several handling devices may be coupled in one handling station, e.g. into a multichannel pipetting system (see e.g. Figures 5A and 5B). When several handling devices are coupled, these handling devices may be commonly addressable, in that the fluid quantities displaced in each device of the invention is the same or substantially the same. Also, the handling devices may each be individually addressable, in that the fluid quantities displaceable in each device of the invention can be adjusted according to the requirements of the particular assay. The number of the handling devices coupled relates preferentially to the number of standard SBS wells, or a part thereof, such as for instance, 1, 8, 24, 96, or 386.

Accordingly, the present invention relates to an apparatus as herein described, comprising a single independent handling device (see e.g. Figure 7).

Accordingly, the present invention relates to an apparatus as herein described, comprising a plurality of independent handling devices, preferably 1-8 handling devices, each individually addressable.

Accordingly, the present invention relates to an apparatus as herein described, comprising a plurality of handling devices, preferably 8, 96 or 386 handling devices, which are commonly addressable.

Further automation of the apparatus as described herein is connoted. Accordingly, the apparatus may further comprise a rack handler assembly, having a rack input area for loading racks comprising reagents and/or samples, said racks possibly comprising a bar code, a rack by-pass section for temporarily stalling racks, an internal shuttle for shuttling racks, and/or an output section for off-loading racks after being processed.

The fluid handling device, i.e. the incubation device and/or the detection device can have a heater/cooler controlled by a thermostat for controlling the temperature of the samples on the arrays.

Accordingly, the present invention relates to the apparatus as described herein, wherein the incubation section is temperature controllable.

The system operates under control of computer, which may optionally comprise a programme for processing the results obtained with the detection device, and interpret the results of the assay. Optionally the computer can transform the data into another format for presentation. Data analysis can include the steps of determining, e.g., fluorescent intensity as a function of substrate position from the data collected, removing "outliers" (data deviating from a predetermined statistical distribution), and calculating the relative binding affinity of the targets from the remaining data. The resulting data can be displayed as an image with colour in each region varying according to the light emission or binding affinity between targets and probes therein.

Accordingly, the present invention relates to the apparatus as described herein, further comprising a single common control console for a workstation.

Accordingly, the present invention relates to the apparatus as described herein, further comprising a computer, programmed to collect the signals detected by the detection device, and possibly converting the virtual signal detected into an analogous image.

Each of the devices according to the invention as well as the racks may be individually identified by an individual code, such as a bar code. Accordingly, the apparatus as described herein may further comprise a bar code reader for ascertaining sample rack identification information and/or device identification information.

### detection

Monitoring or analysing of the interaction between the target and probe molecules can be performed by any means known in the art. In general the interaction between target and probe molecules will be a binding, resulting in the probes molecules being labelled with a detectable marker. The signals generated by the interaction may be transient, i.e. passing especially quickly into and out of existence. The term "transient signal" as used in the present invention refers to e.g. a pulse. The level and intensity of said pulse may be directly linked to the interaction. The signals generated may include radiation in the visible, ultraviolet, infrared and/or other portions of the electromagnetic radiation spectrum, or a difference in magnetism, charge, mass, affinity, enzymatic activity, or reactivity. It will be understood that the interaction analysed according to the present invention may be monitored via for example chemiluminescence, bioluminescence, radioactive radiation, phosphorescence or fluorescence. Detection methods of the generated signals are well known in the art. Signals may be detected or visualized in a variety of ways, with the particular manner of detection being chosen is based on the reporter system which is utilized. Representative detection means include scintillation counting, auto-radiography, optical detection such as fluorescence measurement, colorimetric measurement, light scattering, and the like.

In general, the read time for a micro-array will depend on the photo physics of the fluorophore (i.e. fluorescence quantum yield and photo destruction yield) as well as the sensitivity of the detector. For fluorescein, sufficient signal-to-noise to read a micro-array image with a CCD detector can be obtained in about 0.001-30 seconds using 3 mW/cm² and 488 nm excitation from an Ar ion laser or halogen lamp. By increasing the laser power, and switching to dyes such as Cy3 or Cy5 which have lower photo destruction yields and whose emission more closely matches the sensitivity maximum of the CCD detector, one easily is able to read each micro-array in less than 5 seconds.

A variety of different labels may be employed, where such labels include fluorescent labels, isotopic labels, enzymatic labels, particulate labels, etc. For example, suitable labels include fluorochromes, e.g. fluorescein isothiocyanate (FITC), rhodamine, Texas Red, phycoerythrin, allophycocyanin, 6-carboxyfluorescein (6-FAM), 2',7'-dimethoxy-4',5'-dichloro-6-carboxyfluorescein (JOE), 6-carboxy-X-rhodamine (ROX), 6-carboxy-2',4',7',4,7-hexachlorofluorescein (HEX), 5-carboxyfluorescein (5-FAM) or N,N,N',N'-tetramethyl-6-carboxyrhodamine (TAMRA), cyanine dyes, e.g. Cy5, Cy3, BODIPY dyes, e.g. BODIPY 630/650, Alexa542, etc. Suitable isotopic labels include radioactive labels, e.g. ³²P, ³³P, ³⁵S, ³H. Other suitable labels include size particles that possess light scattering, fluorescent properties or contain entrapped multiple fluorophores. The label may be a two stage system, where the primer and/or probe is conjugated to biotin, haptens, etc. having a high affinity binding partner, e.g. avidin, specific antibodies, etc. The binding partner is conjugated to a detectable label, e.g. an enzymatic label capable of converting a substrate to a chromogenic product, a fluorescent label, an isotopic label, etc.

According to one embodiment, the handling device comprising the supports is moved to the analysis section, for the supports to be scanned. The handling device may be moved by a multi-axis translation stage to the detection device, or it may be transported by a pick-and-place mechanism, such as a robotic arm.

Accordingly, the present invention relates to an apparatus as described herein, wherein the means for transporting is a pick-and-place mechanism, such as a robotic arm.

In the detection section the micro-arrays are interrogated by the detection device. As a result, a 2-dimensional image of the probe arrays of each device is obtained. The devices may be simultaneously or sequentially interrogated.

Accordingly, the present invention relates to an apparatus as described herein, wherein the devices are arranged so as to permit a simultaneous or sequential detection.

The detection section comprises a body for immobilizing the micro-array, preferably at close contact with the detection device. Excitation radiation, from an excitation source having a first wavelength, passes through excitation optics from below the array. The light passes through the support since it is transparent to at least this wavelength of light. The excitation radiation excites a region of the micro-array on the support member. In response, labelled material of the sample on or in the support member emits radiation which has a wavelength that is different from the excitation wavelength. Collection optics, also below the array, then collect the emission from the sample and image it onto a detector, which can house a CCD or CMOS camera. The detector generates a signal proportional to the amount of radiation sensed thereon. The signals can be assembled to represent an image associated with the plurality of regions from which the emission originated.

The detection device can include an auto-focusing feature to maintain the support in the focal plane of the excitation light throughout the scanning process. Further, a temperature controller may be employed to maintain the support at a specific temperature while it is being scanned, or to vary the temperature as required. The multi-axis translation stage, temperature controller, auto-focusing feature, and electronics associated with imaging and data collection are managed by an appropriately programmed digital computer.

In an embodiment, fluorescent probes are employed in combination with CCD or CMOS imaging systems. In another embodiment, the laser, halogen light source, or wavelength specific LEDs are placed below the micro-array and light is directed through the transparent support.

A series of Raman holographic or notch filters can be used in the optical path to eliminate the excitation light while allowing the emission to pass to the detector. A fibre optic imaging bundle may be utilized to bring the light to the CCD detector. The choice of the CCD array will depend on the number of probes in each biological array. In addition, the detection section may comprise different detection devices, each having different excitation wavelengths and detecting different wavelengths. In this manner, different fluorophores can be analysed simultaneously.

One application of this system when coupled with the CCD imaging system that speeds performance of the tests is to obtain results of the assay by examining the on- or off-rates of the binding, e.g. hybridisation. In one embodiment of this method, the amount of binding at each address is determined at several time points after the probes are contacted with the sample. The amount of total binding, e.g. hybridisation, can be determined as a function of the kinetics of binding based on the amount of binding at each time point. Thus, it is not necessary to wait for equilibrium to be reached. The dependence of the binding, e.g. hybridisation, rate for different oligonucleotides on temperature, sample mixing, washing conditions (e.g. pH, solvent characteristics, temperature) can easily be determined in order to maximize the conditions for rate and signal-to-noise.

It will understood that the present invention relates to an apparatus as described herein,
wherein said detection device comprises a camera, preferably a CCD- or CMOS-camera.

### methods

In the methods of this invention, the device as according to claim 1 comprising a housing is provided having a support member. The support member may form a micro-array. Test samples, which may contain target molecules, are introduced to the support members. In general, the test samples will be introduced to the support member by suction, e.g. by applying a negative pressure in the device relative to the ambient pressure. The test samples may also be introduced to the support from the proximal side, e.g. by pipetting the sample directly to the support or by the handling device, which might be necessary because of the flow characteristics of the sample.
In the latter case, i.e. application of the test sample from the proximal side, a positive pressure may be applied, which forces the sample into the channels of the support member. Introduction of the samples from the proximal side would allow a defined sample volume to be added on top of the support. A filter (105) is preferably absent when the test samples are introduced to the support from the,proximal side. A fluid handling device exposes the support members to a chosen set of reaction conditions such as, for example, adding or removing fluid from the support members, maintaining the liquid in and on the support members, possibly at predetermined temperatures, and mixing the fluids in the support members as required, thereby performing the test. Then, a detection device interrogates the probe arrays of the support members, thereby obtaining the results of the tests. A computer having an appropriate programme can further analyse the results from the tests.

The interaction between targets and probes can be characterized in terms of kinetics and thermodynamics. As such, it may be necessary to interrogate the array while in contact with a solution of labelled targets. In such systems, the detection system must be extremely selective, with the capacity to discriminate between surface-bound and solution-born targets. Also, in order to perform a quantitative analysis, the high-density of the probe sequences requires the system to have the capacity to distinguish between each feature site. The system also should have sensitivity to low signal and a large dynamic range.

In typical diagnostic applications, a solution containing one or more targets to be identified (i.e., samples from patients) contacts the probe array. The targets will bind, e.g. hybridise, with complementary probe sequences. Accordingly, the probes will be selected to have sequences directed to (i.e., having at least some complementarity with) the target sequences to be detected, e.g., human or pathogen sequences. Generally, the targets are tagged with a detectable label. The detectable label can be, for example, a luminescent label, a light scattering label or a radioactive label (see above). Accordingly, locations at which targets bind, e.g. hybridise, with complementary probes can be identified by locating the markers. Based on the locations where binding, e.g. hybridisation, occurs, information regarding the target sequences can be extracted. The existence of a mutation may be determined by comparing the target sequence with the wild type.

As used herein, the term "sample" refers to a substance that is being assayed for the presence of one or more target molecules of interest such as e.g. nucleic acids. The nucleic acid or nucleic acids of interest may be present in a mixture of other nucleic acids. A sample, containing nucleic acids of interest, may be obtained in numerous ways. Virtually any sample may be analysed using the method according to the present specification including cell lysates, purified genomic DNA, body fluids such as from a human or animal, clinical samples, food samples, etc. Usually, the sample is a biological or a biochemical sample. The term "biological sample," as used herein, refers to a sample obtained from an organism or from components (e.g., cells) of an organism. The sample may be of any biological tissue or fluid. Frequently the sample will be a "clinical sample" which is a sample derived from a patient. Such samples include, but are not limited to, sputum, cerebrospinal fluid, blood, blood fractions such as serum including fetal serum (e.g., SFC) and plasma, blood cells (e.g., white cells), tissue or fine needle biopsy samples, urine, peritoneal fluid, and pleural fluid, or cells there from. Biological samples may also include sections of tissues such as frozen sections taken for histological purposes. The sample can be, for example, also a physiological sample.

The present invention thus relates to a method for the analysis of an interaction between target and probe molecules, comprising:
(a) administering a sample fluid possibly comprising target molecules to the support member of the device as defined in claim 1 or the apparatus as defined in claim 8,
(b) entering the sample fluid into the channels of the support member by capillary forces or by applying a pressure difference over the support member, whereby the target molecules are contacted with the probe molecules,
(c) possibly generating an alternating flow through the support member whereby at least part of the sample is forced to pass through the channels from the distal side of the support member to the proximal side of the support member and back at least one time (or *vice versa*), under conditions enabling the interaction between target and probe molecules, and
(d) analysing an interaction between target and probe molecules.

### Interaction

Dependent on the type of probe molecules immobilised on the micro-array and the chemical nature of the target molecules (see above), interactions between nucleic acid-nucleic acid, nucleic acid-peptide, peptide-peptide, chemical drugs-peptides, chemical drugs-nucleic acids, chemical drugs-lipids, and the like can be assessed via these methods.

The present invention relates particularly to nucleic acid-nucleic acid interactions. The support member comprising the probe molecules is contacted with a target molecule, which may be labelled or unlabelled, depending on the particular array format, under hybridisation conditions. By "hybridisation conditions" is meant conditions sufficient to promote Watson-Crick hydrogen bonding to occur between the target and probe nucleic acids. The conditions may discriminate between perfectly complementary hybrids and hybrids containing one or more mismatches. The actual hybridisation conditions used will depend upon, among other factors, the G+C content of the sequence of interest and the lengths of the immobilized polynucleotides comprising the array. Hybridisation conditions useful for discriminating between perfect complements and mismatches for a variety of hybridisation arrays have been described in the art. For example, hybridisation conditions useful for discriminating complementary and mismatched hybrids in a variety of applications are described in U.S. Pat. No. 5,525,464 to Drmanac et al., WO 95/09248 and WO 98/31836. A detailed discussion of the theoretical and practical considerations involved in determining hybridisation conditions, and including a discussion of the advantages of low-temperature washing steps, may be found in WO 98/31836, particularly pages 50-62. Additional guidance may be found in Harmes and Higgins, Nucleic Acid Hybridization: A Practical Approach, 1985, IRL Press, Oxford, England. The hybridisation conditions, such as hybridisation time, temperature, wash buffers used, etc. can be altered to optimise the efficient and specific binding of the target sequences. Test target nucleic acids having sequence similarity to the probes may be detected by hybridisation under low stringency conditions, for example, at 50 °C and 6 x SSC (0.9 M sodium chloride/0.09 M sodium citrate, 1% SDS) and remain bound when subjected to washing at 55 °C in 1 x SSC (0.15 M sodium chloride/0.015 M sodium citrate, 1% SDS). Test target molecules with complete or high sequence identity may be determined by hybridisation under stringent conditions, for example, at 60 °C or higher and 6 x SSC (15 mM sodium chloride/0.015 mM sodium citrate, 1 % SDS). For example, the target nucleic acids may have a region of substantial identity to the provided probe sequence on the array and bind selectively under stringent hybridisation conditions. Other suitable hybridisation conditions for various nucleic acid pairs are well known to those skilled in the art and reviewed, for instance, in Sambrook et al., 1989 (Molecular Cloning: a laboratory manual; Cold Spring Harbor Laboratory Press USA), and in WO 95/21944.

The present invention thus also relates to a method as described herein, wherein said interaction is a binding, such as, for instance, a hybridisation, between target and probe molecules.

In addition, the present invention relates to a method as described herein, wherein said interaction results in the binding between target and probe molecules, whereby the target molecule is labelled with a detectable tag or marker. In addition, the present invention relates to a method as described herein, whereby the target and probe molecules interacted, after which the target molecule is labelled with a detectable marker, e.g. a sandwich assay.

Moreover, the present invention relates to a method as described herein, wherein said detectable marker elicits a detectable signal, such as a fluorescent or a near Infra Red signal.

Moreover, the present invention relates to a method as described herein, wherein said detectable signal is quantifiable.

The target molecules may be present in low amounts, for example present in biological samples, giving rise to hardly detectable signals. Methods for specifically amplifying the target molecules or signals are well known in the art. Particularly contemplated are the amplification methods by NASBA, Qβ-replicase, PCR, Transcription Mediated Amplification (TMA) and the ligase chain reaction (LCR), all described in "The commercial applications of molecular diagnostics", published by Decision Resources, September 1999, and Tyras, as described in EP-B-1 056 884.

Also, in the method according to the present invention the target nucleic acids may be amplified using the Ligase Detection Reaction (LDR). Amplification via LDR comprises a first nucleic acid probe complementary to a distinct part of said target nucleic acid and a second nucleic acid probe complementary to a second part of said target nucleic acid located essentially adjacent to said distinct part of said target nucleic acid, wherein said first nucleic acid probe further comprises a 5' located primer binding section and possibly a stuffer, and said second nucleic acid probe possibly comprises a 3' located ZipComcode (complementary Zipcode) tag, which is essentially non-complementary to said target nucleic acid and a primer binding section located 3' from the ZipComcode, the method further comprising, incubating said nucleic acid allowing hybridisation of complementary nucleic acids, connecting any essentially adjacent probes (by ligating), and possibly amplifying any connected probe nucleic acid, wherein amplification is initiated by binding of nucleic acid primers specific for primer binding sections. The amplified target molecule comprising the ZipComcode is subsequently hybridised to the complementary Zipcode present on the support of the invention. Ligation detection reactions are exemplified in WO 03/052142 by Keygene NV.

Hence, the present invention relates to a method as described herein, wherein said incubation comprises a ligation and/or amplification step, such as NASBA, Tyras, LCR, Qβ-replicase or PCR.

In an embodiment of the present invention, the probe molecules comprise ZIPcodes, which enable identification.

### Uses

The methods of this invention will find particular use wherever low, medium or high scalable through-put of samples is required. In particular, this invention is useful in clinical settings and for sequence verification by hybridisation of large numbers of DNA samples, for example in connection with the Human Genome project. Also, the invention is useful when flexibility is required with automated or standardized equipment.

The device will be particularly useful in gene expression testing and profiling, testing for mutations, SNP-testing, genetic testing, e.g. testing for genetic disorders, protein profiling, testing for kinase activity and the like.

The clinical setting requires performing the same test on many patient samples. The automated methods of this invention lend themselves to these uses when the test is one appropriately performed on a micro-array. For example, a DNA array can determine the particular strain of a pathogenic organism based on characteristic DNA sequences of the strain. The advanced techniques based on these assays now can be introduced into the clinic. Fluid samples from several patients are presented to the micro-arrays of the device of the invention and the assays can be performed concurrently.

The methods of the invention can involve the binding of tagged target molecules to the probes. The tags can be, for example, fluorescent markers, chemiluminescent markers, light scattering markers or radioactive markers. In certain embodiments, the probes are nucleic acids, such as DNA or RNA molecules. The methods can be used to detect or identify a pathogenic organism, such as HCV or HIV, or to detect a human gene variant, such a the gene for a genetic disease such as cystic fibrosis, diabetes, muscular dystrophy or predisposition to certain cancers.

Particular assays that will find use in automation include those designed specifically to detect or identify particular variants of a pathogenic organism, such as HCV or HIV. Assays to detect or identify a human, animal or microbial gene are also contemplated. In one embodiment, the assay is the detection of a human gene variant that indicates existence of or predisposition to a genetic disease, either from acquired or inherited mutations in an individual DNA. These include genetic diseases such as cystic fibrosis, diabetes, and muscular dystrophy, as well as diseases such as cancer.

Accordingly, an embodiment of the invention relates to the use of the device of the invention or an apparatus as described herein for interacting target and probe molecules.

The invention may further be used in a multiplex Ligase Detection Reaction (see above) or preferably in the combination of multiplex Ligase Detection Reaction and multiplex Polymerase Chain Reaction (PCR). The Ligase Detection Reaction (LDR) is a sensitive assay for detecting Single Nucleotide Polymorphisms (SNPs), as described by Favis et al., (2000, Nature Biotechnology 18: 561 - 564).
The ZipComcode (ZCc) is a unique sequence for identification of possibly amplified products. The ZCc will hybridise to its complement the Zipcode, present on for instance a micro-array (see above). Busti et al. (2002, BMC Microbiology 2: 27-39), details a universal DNA micro-array comprising Zipcodes and using ZCc on target molecules. For instance, a difference in a single nucleotide along the 16S rRNA may be employed to distinguish between sequences of different micro-organisms. Similarly, single nucleotide differences along the 18S, 23S or 28S rRNA may be employed to distinguish between sequences of different micro-organisms.

Accordingly, an embodiment of the invention relates to the use of the device of the invention or an apparatus as described herein for a ligase detection reaction.

### General

The device according to the invention may be packed and shipped individually or collectively, i.e. more than one device (100), in a kit. The devices may be conductive and may be presented in a rack, for instance a plastic tip rack. The devices may be arranged in an orderly fashion in the rack, for instance at the same positions as the holder(s) of a fluid handling device. As such, no manual fitting of the bodies to the holders would be necessary. The rack or holder should provide structural support to make it strong and sturdy. The rack (303) may be packed and shipped in an outer, for instance, plastic shell (301) with a lid (302)(see e.g. Figure 6A).

Accordingly, an embodiment of the invention relates to a kit comprising at least one device according to the invention.

Accordingly, an embodiment of the invention relates to a kit as described herein, comprising multiple devices of the invention, preferentially said devices are arranged in an orderly fashion, e.g. a holder or rack.

The present invention provides a substantially novel device and method for performing assays on biological micro-arrays. While specific examples have been provided, the above description is illustrative and not restrictive. Many variations of the invention will become apparent to those of skill in the art upon review of this specification. The scope of the invention should, therefore, be determined not with reference to the above description, but instead should be determined with reference to the appended claims along with their full scope of equivalents.

### SHORT DESCRIPTION OF THE FIGURES

**Figure 1** Side views of devices
   (A) Device (100) comprising a housing (107) having a mouth piece (103) located at the proximal end (102), and a support member (104) located inside the housing (107) at the distal end (101), and further comprising a filter (105) and a shielding member (106).
   (B) Device (100) comprising a housing (107) having a mouth piece (103) located at the proximal end (102), and a support member (104) located on the distal end (101).
   (C) Device (100) comprising a housing (107) having a mouth piece (103) located at the proximal end (102), and a support member (104) located inside the housing (107) at the distal end (101).
**Figure 2** Various embodiments of the device, comprising a housing and a support member (104):
   (A) Devices comprising a support member (104) located inside the housing.
   (B) Devices comprising a support member (104) located at the distal end of the housing.
**Figure 3** Side and bottom views of standard pipet tip and device according to the invention
   (A) Side view of device (100) comprising a housing (107) having a mouth piece (103) located at the proximal end (102), and a support member (104) located on the distal end (101), and further comprising a filter (105).
   (B) Side view of standard 1 ml pipet tip.
   (C) Bottom view (from distal to proximal direction) of the device (100) comprising a support member (104) located on the distal end (101) of the housing (107), and comprising an array (110) having spots (111).
   (D) Exploded bottom view (from distal to proximal direction) of a device (100) comprising a support member (104) located on the distal end of the housing (107), and comprising an array (110) having spots (111).
**Figure 4** Cross section of device comprising a shielding member Device (100) comprising a housing (107), and a support member (104) located at the distal end (101) of the housing (107), and further comprising a shielding member (106).
**Figure 5** Various embodiments of the apparatus, comprising the device:
   (A) Apparatus comprising a handling station (210) comprising 8 individually addressable handling devices (201), a means for transporting (211), an incubation section (212) and an analysis section (213) comprising 1 detection device.
   (B) Apparatus comprising a handling station (210) comprising 96 commonly addressable handling devices, a means for transporting (211), an incubation section (212) and an analysis section (213) comprising 4 detection devices.
**Figure 6** Device in rack
   (A) Rack (303) within outer plastic shell (301) with a removable lid (302) comprising 96 devices (100).
   (B) Exploded bottom view (from distal to proximal direction) of a device (100) comprising a support member (104) located on the distal end of the housing (107), and comprising an array (110) having 96 spots (111).
   (C) Device (100) comprising a housing (107) having a mouth piece (103) located at the proximal end (102), comprising a support member (104) located on the distal end of the housing (107), and comprising an array (110) having 96 spots (111).
   (D) Device (100) comprising a housing (107) and a support member (104) located on the distal end of the housing (107). The device is present in an incubation section (212). Fluid (220) is pumped up and down through the support member (104).
**Figure 7** Device mounted onto a handling station
   (A) Manually operated handling station (210) comprising one individually addressable handling device (201), having a holder (202) and device (100) mounted thereto.
   (B) Exploded view of device (100) mounted with mouthpiece (103) on holder (202), the device comprising a housing (107) and a support member (104) located at the distal end (101) of the housing (107), and further comprising a filter (105). Fluid (220) is present in and on the support member (104).

### EXAMPLES

### Example 1

Detections were performed utilising fluorescent microscopy (Olympus, Tokyo Japan).

Oligonucleotides were prepared and coupled to the support member as previously described in PCT/EP98/04938. A non-human plant virus sequence from the Potato Leafroll RNA Virus (PLRV)-S2 sequence was used as internal reference IRP; (see Klerks et al. J. Vir. Methods 93 (2001)115-125).

A standard 1 ml pipet tip was cut at about 5.2 cm from the proximal end. The support member comprising the oligonucleotides was attached, i.e. glued, at the distal end of the pipet tip to obtain a pamtip, i.e. the device (100) according to the invention.

The further experimental set up was essentially as described in WO 99/02266.

After incubating the sample on the array of the device, specific binding was detected.

## Claims

1. A device (100) for analysing an interaction between target and probe molecules, comprising:
- a pipette tip having a tubular housing (107) having a proximal end (102) and a distal end (101) defining an internal flow passageway, wherein said tubular housing has a constant diameter and a frustoconical structure tapering from the distal side, and
- a flow through support member (104) provided within or on the housing (107) obstructing said internal passageway, where said flow through support member (104) is in the form of a sheet, film or membrane
**characterized in that** said flow through support member (104) is provided with through going channels having a pore size diameter between 50-400 nm, said channels provided with probe molecules suitable for allowing an interaction between target and probe molecules, and wherein the thickness of the said flow through support member is inferior to 500 µm.

2. The device (100) according to claim 1, whereby the support member (104) is provided at or near the distal end (101) of the housing (107).

3. The device (100) according to claims 1 or 2, wherein said support member (104) is chosen from the group consisting of metals, ceramic metal oxides, silicon, organic polymers and metal oxides, preferably aluminium oxide.

4. The device (100) according to any of the claims 1 to 3, wherein said support member (104) is optically transparent or translucent.

5. The device (100) according to any of the claims 1 or 4, wherein said channels extend substantially coaxial with the longitudinal axis of the housing (107).

6. The device (100) according to any of the claims 1 to 5, wherein the plane of the support member (104) extends substantially perpendicular to the longitudinal axis of the housing (107).

7. The device (100) according to any of the claims 1 to 6, wherein the support member (104) spans the bore of the housing (107).

8. An apparatus for analysing an interaction between target and probe molecules, comprising:
(a) a handling station (210) comprising a handling device (201), for aspirating and/or dispensing fluid medium, said handling device comprising a device according to any of the claims 1 to 7, mounted thereto,
(b) a means for transporting (211) said handling station to a plurality of sections,
(c) at least one incubation section (212) comprising an incubation device, for administering a fluid sample comprising target molecules to the support member, incubating the support member comprising the fluid sample and/or washing the support member, and
(d) an analysis section (213) comprising a detection device for detecting an interaction between target and probe molecules, thereby analysing an interaction.

9. Method for the analysis of an interaction between target and probe molecules, comprising:
(a) administering a sample fluid possibly comprising target molecules to the support member (104) of the device (100) according to any of the claims 1 to 7, or the apparatus of claim 8,
(b) entering the sample fluid into the channels of the support member (104) by capillary forces or by applying a pressure difference over the support member, whereby the target molecules are contacted with the probe molecules,
(c) possibly generating an alternating flow through the support member (104) whereby at least part of the sample is forced to pass through the channels from the distal side of the support member to the proximal side of the support member and back at least one time, under conditions enabling the interaction between target and probe molecules, and
(d) analysing an interaction between target and probe molecules.

## Patentansprüche

1. Vorrichtung (100) zum Analysieren einer Wechselwirkung zwischen einem Zielobjekt und Sondenmolekülen, welche umfasst:
- eine Pipettenspitze mit einem rohrförmigen Gehäuse (107), das ein nahes Ende (102) und ein entferntes Ende (101) aufweist und einen internen Flussdurchgang definiert, wobei das rohrförmige Gehäuse einen konstanten Durchmesser und eine kegelstumpfförmige Struktur aufweist, die von dem entfernten Ende aus konisch zuläuft, und
- ein Trägerelement (104) mit einem Durchfluss, das innerhalb oder auf dem Gehäuse (107) bereitgestellt ist und den internen Flussdurchgang hemmt, wobei das Trägerelement (104) mit einem Durchfluss in der Form einer Folie, eines Films oder einer Membran vorliegt,
**dadurch gekennzeichnet, dass** das Trägerelement (104) mit einem Durchfluss mit durchgehenden Kanälen versehen ist, die einen Durchmesser der Porengröße zwischen 50 bis 400 nm aufweisen, wobei die Kanäle mit Sondenmolekülen versehen sind, die dazu geeignet sind, eine Wechselwirkung zwischen einem Zielobjekt und den Sondenmolekülen zu ermöglichen, und wobei die Dicke des Trägerelementes mit einem Durchfluss unterhalb von 500 µm liegt.

2. Vorrichtung (100) nach Anspruch 1, wobei das Trägerelement (104) am oder in der Nähe des entfernten Endes (101) des Gehäuses (107) bereitgestellt ist.

3. Vorrichtung (100) nach den Ansprüchen 1 oder 2, wobei das Trägerelement (104) ausgewählt ist aus der Gruppe bestehend aus Metallen, keramischen Metalloxiden, Silizium, organischen Polymeren und Metalloxiden, vorzugsweise Aluminiumoxid.

4. Vorrichtung (100) nach einem der Ansprüche 1 bis 3, wobei das Trägerelement (104) optisch transparent oder durchsichtig ist.

5. Vorrichtung (100) nach einem der Ansprüche 1 oder 4, wobei sich die Kanäle im Wesentlichen koaxial mit der Längsachse des Gehäuses (107) erstrecken.

6. Vorrichtung (100) nach einem der Ansprüche 1 bis 5, wobei die Ebene des Trägerelementes (104) sich im Wesentlichen senkrecht zu der Längsachse des Gehäuses (107) erstreckt.

7. Vorrichtung (100) nach einem der Ansprüche 1 bis 6, wobei das Trägerelement (104) die Bohrung des Gehäuses (107) umspannt.

8. Vorrichtung zum Analysieren einer Wechselwirkung zwischen einem Zielobjekt und Sondenmolekülen, welche umfasst:
a) eine Handhabungsstation (210), die eine daran befestigte Handhabungsvorrichtung (201) umfasst, zum Ansaugen und / oder Verteilen eines fluiden Mediums, wobei die Handhabungsvorrichtung eine Vorrichtung nach einem der Ansprüche 1 bis 7 umfasst,
b) ein Mittel zum Transportieren (211) der Handhabungsstation zu mehreren Abschnitten;
c) mindestens einen Inkubationsabschnitt (212), der eine Inkubationsvorrichtung umfasst, zur Verabreichung einer Fluidprobe (bzw. Flüssigkeitsprobe), die Zielmoleküle umfasst, an das Trägerelement, ein Inkubieren des Trägerelementes, das die Fluidprobe umfasst, und/oder ein Waschen des Trägerelementes, und
d) einen Analyseabschnitt (213), der eine Nachweisvorrichtung zum Nachweisen einer Wechselwirkung zwischen einem Zielobjekt und Sondenmolekülen und **dadurch** ein Analysieren der Wechselwirkung umfasst.

9. Verfahren für die Analyse einer Wechselwirkung zwischen einem Zielobjekt und Sondenmolekülen, welches umfasst:
a) eine Verabreichung eines Probefluids, das möglicherweise Zielmoleküle umfasst, an das Trägerelement (104) der Vorrichtung (100) nach einem der Ansprüche 1 bis 7 oder an die Vorrichtung nach Anspruch 8.
b) ein Einführen des Probefluids in die Kanäle des Trägerelementes (104) durch die Kapillkräfte oder durch Ausüben einer Druckdifferenz über das Trägerelement, wodurch die Zielmoleküle mit den Sondenmolekülen in Kontakt gebracht werden;
c) ein mögliches Erzeugen eines alternierenden Flusses durch das Trägerelement (104), wodurch mindestens ein Teil der Probe dazu gezwungen wird, mindestens einmal durch die Kanäle von der entfernten Seite des Trägerelementes zu der nahen Seite des Trägerelementes und zurück hindurchzugehen, und dies unter Bedingungen, welche die Wechselwirkung zwischen einem Zielobjekt und den Sondenmolekülen ermöglichen, und
d) ein Analysieren einer Wechselwirkung zwischen einem Zielobjekt und den Sondenmolekülen.

## Revendications

1. Dispositif (100) d'analyse d'une interaction entre des molécules cibles et des molécules sondes, comprenant :
- un embout de pipette ayant un logement tubulaire (107) équipé d'une extrémité proximale (102) et d'une extrémité distale (101) définissant une voie de passage interne pour l'écoulement, dans lequel ledit logement tubulaire a un diamètre constant et une structure frustoconique rétrécissant depuis l'extrémité distale, et
- un élément de support de l'écoulement (104) disposé dans un sur le logement (107) obstruant ladite voie de passage interne, dans lequel ledit élément de support de l'écoulement (104) est sous la forme d'une feuille, d'un film ou d'une membrane,
**caractérisé en ce que** ledit élément de support de l'écoulement (104) est doté de canaux de circulation ayant un diamètre de dimension des pores compris entre 50 et 400 nm, lesdits canaux contenant des molécules sondes permettant une interaction entre les molécules cibles et les molécules sondes, et dans lequel l'épaisseur dudit élément de support de l'écoulement est inférieure à 500 µm.

2. Dispositif (100) selon la revendication 1, moyennant quoi l'élément de support (104) est disposé au niveau ou à proximité de l'extrémité distale (101) du logement (107).

3. Dispositif (100) selon les revendications 1 ou 2, dans lequel ledit élément de support (104) est choisi dans le groupe constitué par les métaux, les oxydes de métal-céramique, le silicium, les polymères organiques et les oxydes métalliques, de préférence l'oxyde d'aluminium.

4. Dispositif (100) selon l'une quelconque des revendications 1 à 3, dans lequel ledit élément de support (104) est optiquement transparent ou translucide.

5. Dispositif (100) selon l'une quelconque des revendications 1 à 4, dans lequel lesdits canaux s'étendent de manière sensiblement coaxiale par rapport à l'axe longitudinal du logement (107).

6. Dispositif (100) selon l'une quelconque des revendications 1 à 5, dans lequel le plan de l'élément de support (104) s'étend de manière sensiblement perpendiculaire par rapport à l'axe longitudinal du logement (107).

7. Dispositif (100) selon l'une quelconque des revendications 1 à 6, dans lequel l'élément de support (104) chevauche l'alésage du logement (107).

8. Appareil d'analyse d'une interaction entre les molécules cibles et les molécules sondes, comprenant :
(a) une station de manipulation (210) comprenant un dispositif de manipulation (201), pour aspirer et/ou envoyer le milieu liquide, ledit dispositif de manipulation comprenant un dispositif selon l'une quelconque des revendications 1 à 7, fixé à celui-ci,
(b) un moyen de transport (211) de ladite station de manipulation vers une pluralité de sections,
(c) au moins une section d'incubation (212) comprenant un dispositif d'incubation, pour administrer un échantillon liquide comprenant des molécules cibles dans l'élément de support, incuber l'élément de support comprenant l'échantillon liquide et/ou rincer l'élément de support, et
(d) une section d'analyse (213) comprenant un dispositif de détection pour détecter une interaction entre des molécules cibles et des molécules sondes, analysant ainsi une interaction.

9. Procédé d'analyse d'une interaction entre des molécules cibles et des molécules sondes, comprenant :
(a) l'administration d'un échantillon liquide comprenant éventuellement des molécules cibles dans l'élément de support (104) du dispositif (100) selon l'une quelconque des revendications 1 à 7, ou l'appareil de la revendication 8,
(b) l'injection de l'échantillon liquide dans les canaux de l'élément de support (104) par des forces capillaires ou en appliquant une différence de pression sur l'élément de support, moyennant quoi les molécules cibles sont mises en contact avec les molécules sondes,
(c) la production éventuelle d'un écoulement alternatif dans l'élément de support (104), moyennant quoi au moins une partie de l'échantillon est forcée de traverser les canaux depuis l'extrémité distale de l'élément de support vers l'extrémité proximale de l'élément de support et d'effectuer le chemin inverse au moins une fois, dans des conditions permettant l'interaction entre les molécules cibles et les molécules sondes, et
(d) l'analyse d'une interaction entre les molécules cibles et les molécules sondes.
